# EUROPEAN PATENT SPECIFICATION

(11) **EP 3 318 735 B1**
(45) Date of publication and mention of the grant of the patent: **15.04.2020**
(21) Application number: 16818010.7
(22) Date of filing: 30.06.2016
(51) Int. Cl.: F01N 3/022, B01J 19/08, F01N 3/01, H05H 1/24

(54) **PLASMA GENERATING ELECTRODE, ELECTRODE PANEL, AND PLASMA REACTOR**
PLASMAERZEUGUNGSELEKTRODE, ELEKTRODENPLATTE UND PLASMAREAKTOR
ÉLECTRODE DE GÉNÉRATION DE PLASMA, PANNEAU D'ÉLECTRODE, ET RÉACTEUR À PLASMA

(30) Priority: 30.06.2015 JP 2015130643; 30.06.2015 JP 2015130644
(43) Date of publication of application: 09.05.2018
(73) Proprietor: NGK Spark Plug Co., Ltd., Aichi 467-8525 (JP)
(72) Inventor: MADOKORO, Kazuhiko, Gamo-gun Shiga 520-2531 (JP); NAITO, Kazuya, Gamo-gun Shiga 520-2531 (JP); UENISHI, Mari, Gamo-gun Shiga 520-2531 (JP); TANAKA, Hirohisa, Gamo-gun Shiga 520-2531 (JP); NADANAMI, Norihiko, Nagoya-shi Aichi 467-8525 (JP); SAKAI, Shigehito, Nagoya-shi Aichi 467-8525 (JP)
(74) Representative: Zimmermann & Partner Patentanwälte mbB
(86) International application number: PCT/JP2016/069401
(87) International publication number: WO 2017/002902

(56) References cited:
- EP-A1- 1 638 377
- EP-A1- 1 703 540
- EP-A1- 2 174 707
- WO-A1-2004/114729
- JP-A- 2004 027 982
- JP-A- 2010 115 566
- JP-A- 2010 142 758
- JP-A- 2010 142 758

## Description

### TECHNICAL FIELD

The present invention relates to an electrode for plasma generation, an electrode panel, and a plasma reactor, and more particularly to the plasma generating electrode, the electrode panel, and the plasma reactor suitable for a device for removing PM (particulate matter) contained in exhaust gas from an internal combustion engine.

### BACKGROUND ART

Exhaust gas emitted from engines, particularly diesel engines, includes CO (carbon monoxide), HC (hydrocarbon), NOx (nitrogen oxides) and PM (particulate matter) and the like.

A method has been proposed for removing PM contained in exhaust gas in which PM collected with a DPF (diesel particulate filter) is burned by post-injecting fuel or injecting fuel into the exhaust pipe to increase the temperature of the exhaust gas. However, this method has a problem in which fuel consumption efficiency deteriorates due to fuel consumption when burning PM. Also, such a method is unsuitable for compact cars frequently used for so-called city driving (i.e., driving in an urban area), where the temperature of the exhaust gas does not rise high enough to burn PM.

In view of this, by applying a voltage between electrodes that are incorporated into a plurality of flat plate-like dielectrics arranged in a direction parallel to a flow direction of the exhaust gas while facing each other in a direction orthogonal to the flow direction, a low-temperature plasma (i.e., non-equilibrium plasma) is generated to oxidize and remove PM in the exhaust gas flowing between the dielectrics.
EP 1 638 377 A1 describes a plasma generating electrode, plasma generation device, and exhaust gas purifying apparatus. JP 2010 142758 A describes an exhaust gas purification device. EP 2 174 707 A1 describes an electrode for plasma generation. EP 1 703 540 A1 describes a plasma reactor.

### PRIOR ART DOCUMENT

### PATENT DOCUMENT

Patent Document 1: Japanese Patent No. 4220778

### SUMMARY OF THE INVENTION

Herein is disclosed a plasma generating electrode for generating plasma by a dielectric barrier discharge, for use in a plasma reactor comprising a dielectric extending in a flow direction of exhaust gas. The plasma generating electrode comprises a first line portion extending in a first direction; a second line portion extending in a second direction which intersects with the first direction; and a third line portion extending in a direction that intersects with both the first direction and the second direction. A portion where the first line portion, the second line portion, and the third line portion intersect is provided with a hole in the thickness direction.

### PROBLEMS TO BE SOLVED BY THE INVENTION

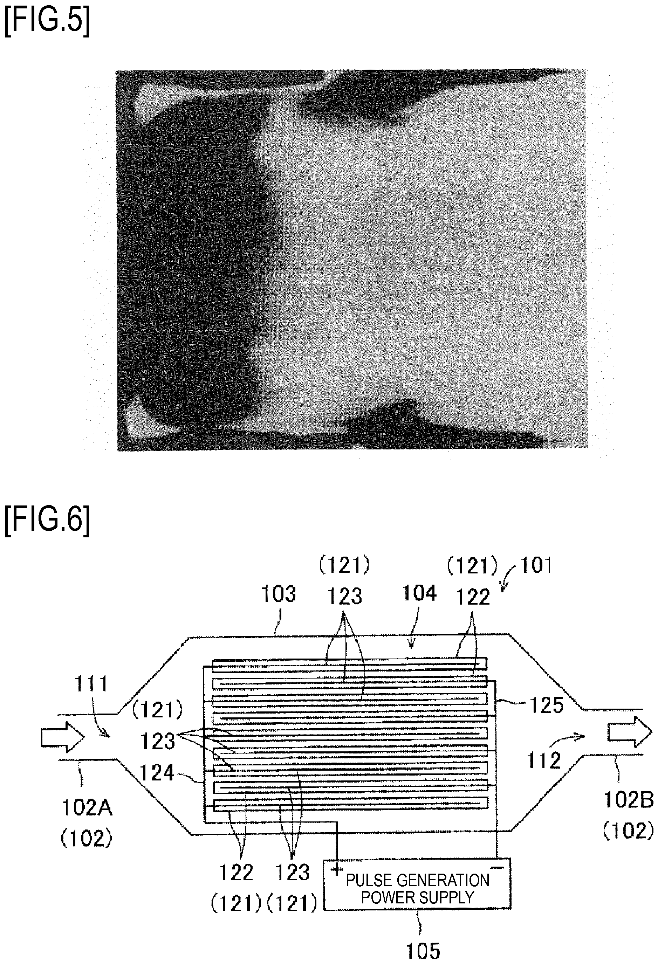

Since PM in the exhaust gas is oxidized as it flows downstream between the dielectrics, a PM concentration gradient forms between the dielectrics (i.e., in the reactor). As a result, as shown in FIG. 5, on the upstream side between the dielectrics, PM may adhere to the surface of the dielectric and be deposited. Deposition of PM on the surface of the dielectric reduces PM removal efficiency.

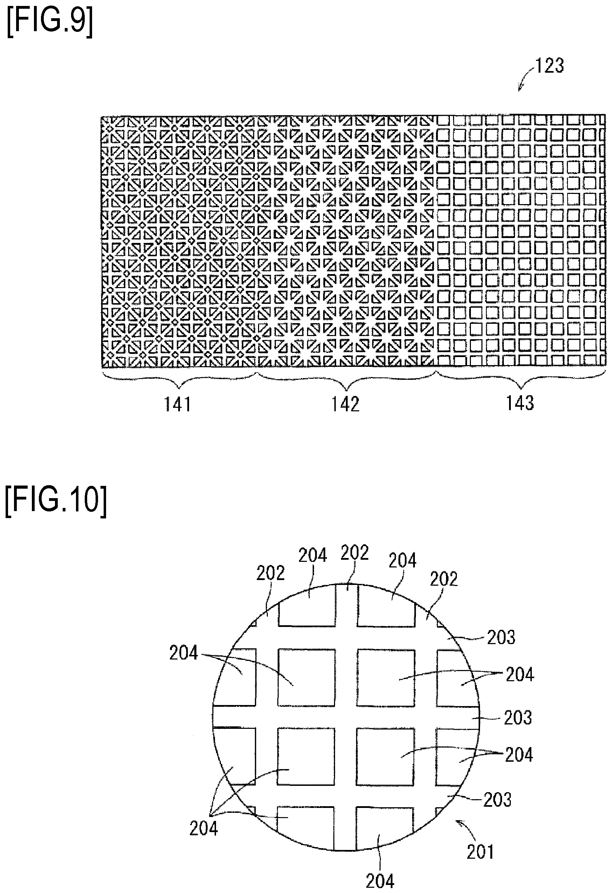

As shown in FIG. 10, for example, an electrode 201 has many rectangular-shaped mesh openings 204 in a grid shape formed by a plurality of vertical line portions 202, extending in a vertical direction, and a plurality of horizontal line portions 203, extending in a horizontal direction. When a voltage is applied between the electrodes 201, plasma is generated by dielectric barrier discharges between the dielectrics.

Discharge originates from the edges of the vertical line portion 202 and the horizontal line portion 203 surrounding the mesh openings 204. However, the configuration shown in FIG. 10 has a problem in which plasma can not be efficiently generated because the number of edges serving as starting points of discharge is small.

An object of the present invention is to provide a plasma generating electrode, an electrode panel, and a plasma reactor capable of suppressing the deposition of PM on the surface of the dielectric. Another object of the present invention is to provide a plasma generating electrode, an electrode panel, and a plasma reactor capable of efficiently generating plasma.

### MEANS FOR SOLVING THE PROBLEMS

In order to achieve the above object, a plasma generating electrode according to one aspect of the present invention is a plasma generating electrode for generating plasma and is used in a plasma reactor having a dielectric extending in the flow direction of exhaust gas, wherein a section upstream in the flow direction is provided with holes in the thickness direction at a relatively high density and a section downstream is provided with holes in the thickness direction at a relatively low density, and the holes are polygonal in a plan view.

The density is the number of holes per unit area.

According to this configuration, plasma with a relatively high plasma density is generated in the upstream section of the plasma generating electrode because the holes upstream in the flow direction of the exhaust gas are provided at a relatively high density, whereas plasma with a relatively low plasma density is generated in the downstream section because the holes downstream are provided at a relatively low density. As a result, PM can be removed efficiently at the upstream side of the plasma reactor and deposition of PM on the surface of the dielectric can be suppressed. On the other hand, on the downstream side of the plasma reactor, even if PM, having flowed downstream without being removed at the upstream side, adheres to the surface of the dielectric, the PM can be removed by plasma generated downstream or by active species (i.e., radicals, ozone, etc.) flowing down from the upstream side, thereby suppressing the deposition of PM on the surface of the dielectric.

In this way, deposition of PM on the surface of the dielectric and reduction in PM removal efficiency can be suppressed.

Furthermore, since each hole has a polygonal shape in plan view, when a voltage is applied to the plasma generating electrode, high density plasma can be generated since each corner of the hole serves as a starting point of discharge.

The plasma generating electrode may have a grid shape having a plurality of vertical line portions, extending in the vertical direction, and a plurality of horizontal line portions, extending in the horizontal direction.

In this case, the holes may be openings of the grid-shaped mesh.

For example, in the case where a distance between the vertical line portions and a distance between the horizontal line portions are the same in the upstream section, as for the downstream section of the plasma generating electrode, a distance between the vertical line portions may be set larger than the distance between the horizontal line portions, or a distance between the horizontal line portions may be set larger than the distance between the vertical line portions.

In this way, in the upstream section, compared to the downstream section, the size of the holes (i.e., the mesh openings) can be reduced and the density of the holes can be increased.

Further, regardless of whether the distance between the vertical line portions and the distance between the horizontal line portions in the upstream section are the same or not, in the upstream section of the plasma generating electrode in comparison to the downstream section, the distance between the vertical line portions and/or the distance between the horizontal line portions may be set small.

As a result, in the upstream section, the size of the holes (i.e., mesh openings) can be reduced and the density of the holes can be increased in comparison to the downstream section.

Further, the present invention can be implemented not only in the form of a plasma generating electrode but also in the forms of an electrode panel having a dielectric and an electrode or a plasma reactor having a plurality of electrode panels.

That is, an electrode panel according to another aspect of the present invention is an electrode panel having a dielectric and electrodes for generating plasma by a dielectric barrier discharge. The plasma generating electrode can be used as the electrode of the electrode panel.

In a plasma reactor according to still another aspect of the present invention, a plurality of electrode panels are provided in parallel with spaces therebetween, and plasma is generated by dielectric barrier discharges between the electrode panels. This plasma reactor uses the electrode panel as an electrode panel.

According to the present invention, deposition of PM on the surface of the dielectric and reduction in PM removal efficiency can be suppressed. Furthermore, plasma with high density can be generated.

In order to achieve the above object, a plasma generating electrode according to another aspect of the present invention is used as a plasma reactor having a dielectric extending in the flow direction of exhaust gas. In addition, the plasma generating electrode is used for generating plasma by a dielectric barrier discharge. Further, the plasma generating electrode includes a first line portion extending in a first direction, a second line portion extending in a second direction with intersecting the first direction, and a third line portion extending in a direction with intersecting both the first direction and the second direction. Further, in the plasma generating electrode, at a portion where the first line portion, the second line portion, and the third line portion intersect one another, a hole is provided in the thickness direction the portion.

According to this configuration, the first, second, and third line portions that extend, respectively, in the first, second, and third directions that intersect each other are provided. Accordingly, compared to the grid-shaped electrode having a vertical line portion and a horizontal line portion extending in the vertical direction and the horizontal direction, respectively, the large number of edges per unit area (i.e., the edges of the first line portion, the second line portion and the third line portion) increases the number of starting points of discharge when voltage is applied to the electrode, thus enabling efficient generation of plasma.

In addition, at a portion of the plasma generating electrode where the first line portion, the second line portion, and the third line portion intersect one another, a hole is provided in the thickness direction. Consequently, the number of edges per unit area can be further increased so that plasma can be generated more efficiently.

As a result, plasma intensity per electrode panel, having the dielectric and the electrode, increases. Therefore, even if the number of stacked electrode panels is reduced as compared with that of the conventional one, PM included in the exhaust gas can be excellently oxidized and subsequently removed. By reducing the number of stacked electrode panels, the size of the plasma reactor can be reduced and the cost can be reduced.

The first direction and the second direction are orthogonal to each other, and the third direction may be a direction intersecting the first direction and the second direction at a 45° angle. In this case, it is preferable to have the plasma generating electrode which further includes a fourth line portion extending in a fourth direction orthogonal to the third direction.

Consequently, the number of edges per unit area can be further increased, and plasma can be generated more efficiently.

The present invention can be implemented not only in the form of a plasma generating electrode but also in the form of an electrode panel having a dielectric and an electrode or a plasma reactor having a plurality of electrode panels.

That is, an electrode panel according to another aspect of the present invention is an electrode panel having a dielectric and electrodes for generating plasma by a dielectric barrier discharge. In this electrode panel, a plasma generating electrode is used as the electrode.

In a plasma reactor according to still another aspect of the present invention, a plurality of electrode panels are provided in parallel with spaces therebetween, and plasma is generated by dielectric barrier discharges between the electrode panels. This plasma reactor uses the electrode panel as an electrode panel.

According to the present invention, the number of edges per unit area is larger than the number of edges per unit area in a grid-shaped electrode having vertical and horizontal lines extending in the vertical direction and the horizontal direction, respectively, and since the number of starting points for discharge is large when voltage is applied to the electrode, plasma can be efficiently generated. As a result, since the plasma intensity per electrode panel increases, PM contained in the exhaust gas can be excellently oxidized and removed even if the number of stacked electrode panels is reduced as compared with existing electrode panels. By reducing the number of stacked electrode panels, the size of the plasma reactor can be reduced and the cost can be reduced.

### BRIEF DESCRIPTION OF THE DRAWINGS

[FIG. 1] A cross-sectional view schematically showing a configuration of a plasma generation electrode, an electrode panel, and a PM removal device using a plasma reactor to aid in the understanding of the present invention.
[FIG. 2] A plan view schematically showing a configuration of a plasma generating electrode.
[FIG. 3] A plan view schematically showing another configuration of a plasma generating electrode.
[FIG. 4] A plan view schematically showing still another configuration of a plasma generating electrode.
[FIG. 5] A photograph showing how PM is deposited on the surface of a dielectric.
[FIG. 6] A cross-sectional view schematically showing a configuration of a plasma generating electrode, an electrode panel, and a PM removal device using a plasma reactor according to the present invention.
[FIG. 7] A plan view schematically showing a configuration of a plasma generating electrode, according to the invention.
[FIG. 8] A plan view schematically showing another configuration of a plasma generating electrode to aid in the understanding of the invention.
[FIG. 9] A plan view schematically showing still another configuration of a plasma generating electrode to aid in the understanding of the invention.
[FIG. 10] A plan view schematically showing a configuration of a conventional plasma generating electrode to aid in the understanding of the invention.

### MODES FOR CARRYING OUT THE INVENTION

Hereinafter, embodiments of the present invention will be described in detail with reference to the accompanying drawings.

### <PM removal device>

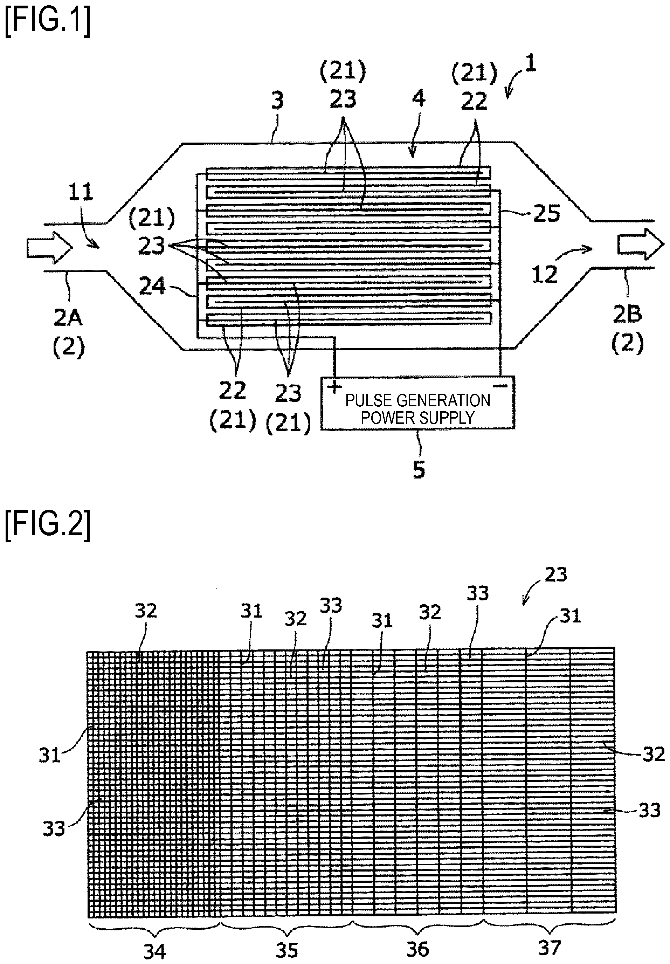

FIG. 1 is a cross-sectional view schematically showing a configuration of a PM removal device 1 that uses a plasma generating electrode 23, an electrode panel 21, and a plasma reactor 4 according to an embodiment of the present invention.

The PM removal device 1 is, for example, a device for removing PM contained in exhaust gas emitted from an automobile engine (not shown), and is interposed within an exhaust pipe 2 or the like. The PM removal device 1 includes a flow pipe 3, a plasma reactor 4, and a pulse generation power supply 5.

The flow pipe 3 is pipe-shaped (i.e., cylindrical shape) having an exhaust gas inlet 11 at one end and an exhaust gas outlet 12 at the other end. The exhaust gas inlet 11 is connected to a part 2A on the engine side of the exhaust pipe 2, while the exhaust gas outlet 12 is connected to a part 2B of the exhaust pipe 2 on the side opposite to the engine side. The exhaust gas emitted from the engine flows through the part 2A on the engine side of the exhaust pipe 2, flows from the exhaust gas inlet 11 into the flow pipe 3, flows through the flow pipe 3, and flows out from the exhaust gas outlet 12 into the part 2B of the exhaust pipe 2 on the side opposite to the engine side.

The plasma reactor (i.e., plasma reactor vessel) 4 is provided in the flow pipe 3. The plasma reactor 4 includes a plurality of electrode panels 21.

Each electrode panel 21 has a rectangular plate shape and a configuration in which a plasma generating electrode 23 is incorporated into a dielectric 22 (hereinafter, the plasma generating electrode is referred to simply as the "electrode"). In other words, the electrode 23 is sandwiched by the dielectric 22 from both sides. The electrode panel 21 having such a configuration is manufactured, for example, by pattern-printing a conductive paste on one of a pair of quadrangular plate-like divided portions made of the material of the dielectric 22, pasting together one divided portion and the other divided portion, and firing them so that the conductive paste is sandwiched between the pair of divided portions. As the material of the dielectric 22, Al2O3 (alumina), for example, can be used. As the conductive paste, tungsten paste, for example, can be used. Each of the plurality of electrode panels 21 extends in a flow direction of the exhaust gas in the flow pipe 3 (i.e., the direction from the exhaust gas inlet 11 toward the exhaust gas outlet 12) and is arranged in parallel at equal distances in a direction orthogonal to the flow direction (i.e., arranged to face each other).

Positive wires 24 and negative wires 25 are alternately connected to the electrodes 23 in the order from one end in the stacking direction of the electrode panels 21. The positive wires 24 and the negative wires 25 are electrically connected to the positive terminal and the negative terminal, respectively, of the pulse generation power supply 5.

### <Electrode>

FIG. 2 is a plan view schematically showing a configuration of the electrode 23.

The electrode 23 has a grid shape having linear portions 31 extending in a vertical direction and linear portions 32 extending in a horizontal direction. In other words, the electrode 23 has a plurality of linear portions 31 extending in the vertical direction and a plurality of linear portions 32 extending in the horizontal direction. In the following description, a linear portion extending in the vertical direction is referred to as a vertical line portion, and a linear portion extending in the horizontal direction is referred to as a horizontal line portion. The electrode 23 has a large number of rectangular mesh openings 33 surrounded by two vertical line portions 31 and two horizontal line portions 32. The electrode 23 is provided so that the horizontal line portions 32 are aligned with the flow direction of the exhaust gas.

The electrode 23 is divided into a first section 34, a second section 35, a third section 36, and a fourth section 37, according to the size of the mesh openings 33.

The first section 34 is on the most upstream side in the flow direction of the exhaust gas. In the first section 34, for example, a distance between the vertical line portions 31 is set to be the same as a distance between the horizontal line portions 32, and the roughly square mesh openings 33 are aligned in the vertical direction and the horizontal direction.

It is not necessary for the distance between the vertical line portions 31 and the distance between the horizontal line portions 32 to be the same, and they may be different from each other.

The second section 35 is on the downstream side of the first section 34 in the flow direction of the exhaust gas. In the second section 35, for example, the distance between the vertical line portions 31 is set to be twice the distance between the horizontal line portions 32, and the distance between the horizontal line portions 32 is set to be the same as the distance between the horizontal line portions 32 in the first section 34. In the second section 35, roughly rectangular mesh openings 33 which are elongated in the horizontal direction (i.e., the flow direction of the exhaust gas) are formed to be in alignment with the vertical direction and the horizontal direction.

The third section 36 is on the downstream side of the second section 35 in the flow direction of the exhaust gas. In the third section 36, for example, the distance between the vertical line portions 31 is set to be four times the distance between the horizontal line portions 32, and the distance between the horizontal line portions 32 is set to be the same as the distance between the horizontal line portions 32 in the first section 34 and the second section 35. In the third section 36, roughly rectangular mesh openings 33 which are longer in the horizontal direction than the mesh openings 33 of the second section 35 are formed to be in alignment with the vertical direction and the horizontal direction.

The fourth section 37 is provided on the most downstream side of the third section 36 in the flow direction of the exhaust gas. In the fourth section 37, for example, the distance between the vertical line portions 31 is set to be eight times the distance between the horizontal line portions 32, and the distance between the horizontal line portions 32 is set be the same as the distance between the horizontal line portions 32 in the first section 34, the second section 35, and the third section 36. In the fourth section 37, roughly rectangular mesh openings 33 which are longer in the horizontal direction than the mesh openings 33 of the third section 36 are formed to be in alignment with the vertical direction and the horizontal direction.

As a result, the mesh openings 33 of the electrode 23 are smallest (i.e., finest) in the first section 34 on the most upstream side in the flow direction of the exhaust gas and become gradually larger (i.e., coarser) in the downstream side in the flow direction of the exhaust gas. In other words, the density of the grid formed by the vertical line portions 31 and the horizontal line portions 32 of the electrode 23 is highest in the first section 34 on the most upstream side in the flow direction of the exhaust gas and decreases step-wise toward the downstream side in the flow direction of the exhaust gas.

The plurality of electrodes 23 is arranged such that the positions of the mesh openings 33 are aligned (i.e., in such a manner that each mesh opening 33 is aligned with mesh openings 33 located directly above and below).

### <Operational Effect>

When a pulse voltage (for example, peak voltage: 8 kV, pulse repetition frequency: 100 Hz) from the pulse generation power supply 5 is applied between electrodes 23 facing each other, the edges of the vertical line portions 31 and the horizontal line portions 32 surrounding the mesh openings 33, particularly the intersections of the vertical line portions 31 and the horizontal line portions 32 (i.e., the corners of the mesh openings 33), become starting points of discharge and plasma is generated between the electrode panels 21 by dielectric barrier discharges. Then, due to the generation of plasma, PM contained in the exhaust gas flowing between the electrode panels 21 is oxidized (i.e., burned) and removed.

Since the mesh openings 33 of the first section 34 are the smallest, the strongest discharge, and thus the highest plasma density, occurs at the most upstream section (i.e., the portion facing the first section 34) in the flow direction of the exhaust gas between the electrode panels 21. Therefore, at the most upstream section in the flow direction of the exhaust gas between the electrode panels 21, PM is efficiently removed and deposition of PM on the surface of the electrode panel 21 can be suppressed. In the portion of exhaust gas between the electrode panels 21 downstream of the most upstream section in the flow direction of the exhaust gas (i.e., the portion facing the second section 35, the third section 36, and the fourth section 37), even if PM that has flowed downstream without being removed on the upstream side adheres to the surface (i.e., the dielectric 22) of the electrode panel 21, the PM can be removed by plasma generated at the downstream section or by active species (i.e., radicals, ozone, etc.) flowing down from the upstream side, thereby suppressing the deposition of PM on the surface of the electrode panel 21.

Consequently, deposition of PM on the entire surface of the electrode panel 21 can be suppressed. As a result, it is possible to maintain the PM removal efficiency of the PM removal device 1 in a satisfactory manner.

The distance between the horizontal line portions 32 of the electrode 23 may be any distance as long as plasma is generated also in the portion of the exhaust gas between the electrode panels 21 facing the center between the horizontal line portions 32 (for example, within a range from 0.1 to 1.0 mm). As a result, even if the distance between the vertical line portions 31 in the fourth section 37 of the electrode 23 is large, plasma can be generated in the entire region of exhaust gas between the electrode panels 21 facing the fourth section 37.

Further, the distance between the electrode panels 21 may be set to any distance as long as a dielectric barrier discharge occurs (for example, within a range from 0.2 to 5.0 mm) .

### <Modification>

Although an embodiment of the present invention has been described above, the present invention can be implemented in other forms.

For example, in the configuration shown in FIG. 2, the distance between the vertical line portions 31 in the second section 35 is set to be twice the distance between the horizontal line portions 32. However, this is merely one example, rather the distance between the vertical line portions 31 needs only to be larger than the distance between the vertical line portions 31 in the first section 34. In the third section 36, the distance between the vertical line portions 31 needs only to be larger than the distance between the vertical line portions 31 in the second section 35 and is not limited to four times the distance between the horizontal line portions 32. In the fourth section 37, the distance between the vertical line portions 31 needs only to be larger than the distance between the vertical line portions 31 in the third section 36, and is not limited to 8 times the distance between the horizontal line portions 32.

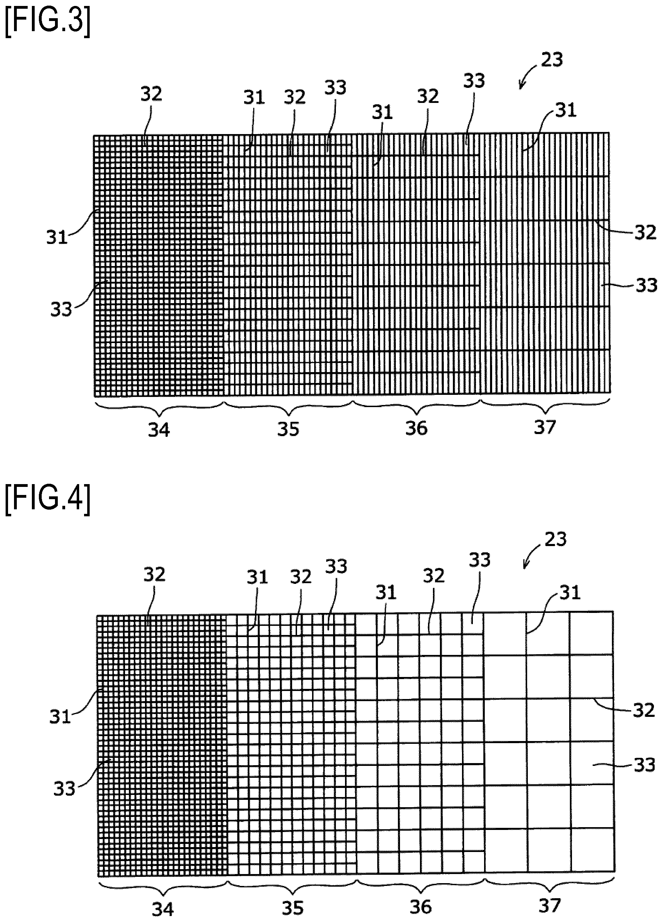

The electrode 23 may have the structure shown in FIG. 3. In the second section 35 of the electrode 23 shown in FIG. 3, the distance between the vertical line portions 31 is set to be equal to the distance between the vertical line portions 31 in the first section 34, and the space between the horizontal line portions 32 is set to be twice the distance between the vertical line portions 31. Further, in the third section 36, the distance between the vertical line portions 31 is set to be equal to the distance between the vertical line portions 31 in the first section 34 and the second section 35, and the distance between the horizontal line portions 32 is set to be four times the distance between the vertical line portions 31. In the fourth section 37, the distance between the vertical line portions 31 is set equal to the distance between the vertical line portions 31 in the first section 34, the second section 35, and the third section 36, and the distance between the horizontal line portions 32 is set to be 8 times the distance between the vertical line portions 31.

Even with the configuration shown in FIG. 3, it is possible to achieve the same operation and effect as the configuration shown in FIG. 2.

In the configuration shown in FIG. 3, the distance between the horizontal line portions 32 in the second section 35 is set to be twice the distance between the vertical line portions 31, but this is merely an example, rather the distance between the horizontal line portions 32 needs only to be larger than the distance between the horizontal line portions 32 in the first section 34. In the third section 36, the distance between the horizontal line portions 32 needs only to be larger than the distance between the horizontal line portions 32 in the second section 35. In the fourth section 37, the distance between the horizontal line portions 32 needs only to be larger than the distance between the horizontal line portions 32 in the third section 36.

The electrode 23 may also have the configuration shown in FIG. 4. In the second section 35 of the electrode 23 shown in FIG. 4, the distance between the vertical line portions 31 is set to be twice the distance between the vertical line portions 31 in the first section 34, and the distance between the horizontal line portions 32 is set to be equal to the distance between the vertical line portions 31. Further, in the third section 36, the distance between the vertical line portions 31 is set to be twice the distance between the vertical line portions 31 in the second section 35, and the distance between the horizontal line portions 32 is set to be the same as the distance between the vertical line portions 31. In the fourth section 37, the distance between the vertical line portions 31 is set to be twice the distance between the vertical line portions 31 in the third section 36, and the distance between the horizontal line portions 32 is set to be the same as the distance between the vertical line portions 31.

Even with the configuration shown in FIG. 4, the same operation and effect as the configuration shown in FIG. 2 can be obtained.

In the second section 35 of the configuration shown in FIG. 4, the distance between the vertical line portions 31 and the distance between the horizontal line portions 32 need only to be larger than the distance between the vertical line portions 31 and the distance between the horizontal line portions 32 in the first section 34, respectively. In the third section 36, the distance between the vertical line portions 31 and the distance between the horizontal line portions 32 need only be larger than the distance between the vertical line portions 31 and the distance between the horizontal line portions 32 in the second section 35, respectively. In the fourth section 37, the distance between the vertical line portions 31 and the distance between the horizontal line portions 32 need only be larger than the distance between the vertical line portions 31 and the distance between the horizontal line portions 32 in the third section 36, respectively.

The electrode 23 is not limited to the configuration including the first section 34, the second section 35, the third section 36, and the fourth section 37. For example, as long as relatively small mesh openings 33 and relatively large mesh openings 33 are formed on the upstream side and the downstream side, respectively, in the flow direction of the exhaust gas, the electrode 23 may be divided into two or three portions depending on the size of the mesh openings 33, or even divided into five or more portions.

Also, although a configuration in which rectangular mesh openings 33 are formed in the electrode 23 has been described, holes having a triangular shape, a hexagonal shape, a star-like polygon shape, or any arbitrary shape containing angles may be provided in the electrode 23 in the thickness direction.

In addition, various design changes can be made to the above configuration within the scope of the items described in the claims.

Hereinafter, another embodiment of the present invention will be described in detail with reference to the accompanying drawings.

### <PM removal device>

FIG. 6 is a cross-sectional view schematically showing a configuration of a PM removal device 101 that uses a plasma generating electrode 123, an electrode panel 121, and a plasma reactor 104 according to an embodiment of the present invention.

The PM removal device 101 is, for example, a device for removing PM contained in exhaust gas emitted from an automobile engine (not shown), and is interposed within an exhaust pipe 102 or the like. The PM removal device 101 includes a flow pipe 103, a plasma reactor 104, and a pulse generation power supply 105.

The flow pipe 103 is pipe-shaped (i.e., cylindrical) having an exhaust gas inlet 111 at one end and an exhaust gas outlet 112 at the other end. The exhaust gas inlet 111 is connected to a part 102A on the engine side of the exhaust pipe 102 and the exhaust gas outlet 112 is connected to a part 102B of the exhaust pipe 102, on the side opposite to the engine side. The exhaust gas emitted from the engine flows through the part 102A on the engine side of the exhaust pipe 102, flows from the exhaust gas inlet 111 into the flow pipe 103, flows through the flow pipe 103, and flows out from the exhaust gas outlet 112 into the part 102B of the exhaust pipe 102, on the side opposite to the engine side.

The plasma reactor (i.e., plasma reactor vessel) 104 is positioned in the flow pipe 103. The plasma reactor 104 includes a plurality of the electrode panels 121.

Each electrode panel 121 has a rectangular plate shape and a configuration in which a plasma generating electrode 123 is incorporated in dielectric 122 (hereinafter, the plasma generating electrode is referred to simply as the "electrode"). In other words, the electrode 123 is sandwiched by the dielectric 122 from both sides. The electrode panel 121 having such a configuration is manufactured, for example, by pattern-printing a conductive paste on one of a pair of quadrangular plate-like divided portions made of the material of the dielectric 122, pasting together one divided portion and the other divided portion and firing them so that the conductive paste is sandwiched between the pair of divided portions. As the material of the dielectric 122, Al2O3 (alumina), for example, can be used. As the conductive paste, tungsten paste, for example, can be used. Each of the plurality of electrode panels 121 extends in the flow direction of the exhaust gas in the flow pipe 103 (i.e., the direction from the exhaust gas inlet 111 toward the exhaust gas outlet 112), and is arranged in parallel at equal distances in the direction orthogonal to the flow direction (i.e., arranged to face each other).

Positive wires 124 and negative wires 125 are alternately connected to the electrodes 123 in order from one end in the stacking direction of the dielectrics 122. The positive wires 124 and the negative wires 125 are electrically connected to the positive terminal and the negative terminal, respectively, of the pulse generation power supply 105.

### <Electrode>

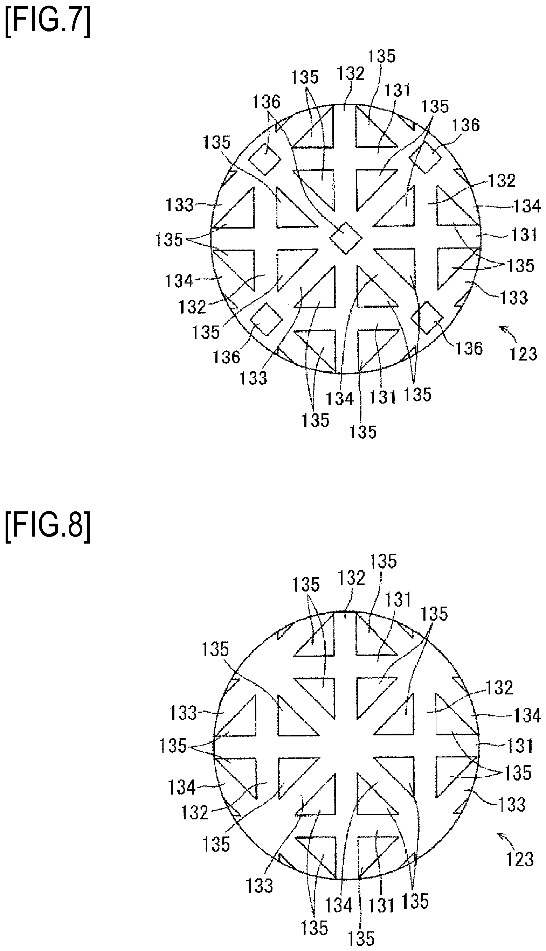

FIG. 7 is a plan view schematically showing a configuration of the electrode 123.

The electrode 123 has a large number of right-angled triangular mesh openings 135 through the provision of a plurality of first line portions 131, second line portion 132, third line portions 133, and fourth line portions 134.

Specifically, a plurality of first line portions 131, each extending linearly in a first direction parallel to the flow direction of the exhaust gas, and provided at regular intervals along a second direction perpendicular to the first direction.

A plurality of second line portions 132, each extending linearly in the second direction, are provided at regular intervals along the first direction. In this way, the first line portions 131 and the second line portions 132 form a square grid.

The third line portions 133 extend, in a third direction that intersects at an angle of 45° with respect to the first direction and the second direction, along diagonals of the square grid formed by the first line portions 131 and second line portions 132.

The fourth line portions 134 extend, in a fourth direction that is orthogonal to the third direction, along diagonals of the square grid formed by the first line portions 131 and the second line portions 132.

In addition, the center of each portion where the first line portion 131, the second line portion 132, the third line portion 133, and the fourth line portion intersect is provided with a hole 136 in the thickness direction. The hole 136 has, for example, a square shape with sides that extend in the third direction and the fourth direction.

### <Operational Effect>

When a pulse voltage (for example, peak voltage: 8 kV, pulse repetition frequency: 100 Hz) from the pulse generation power supply 105 is applied between electrodes 123 facing each other, the edges surrounding each mesh opening 135 and each hole 136 become starting points of discharge and plasma is generated between the electrode panels 121 by dielectric barrier discharges. Then, due to generation of plasma, PM contained in the exhaust gas flowing between the electrode panels 121 is oxidized (i.e., burned) and removed.

In electrode 123, the number of edges per unit area is larger than the number of edges per unit area in the grid-shaped electrode (see FIG. 10) having vertical and horizontal line portions extending in the vertical direction and the horizontal direction, respectively, and since the number of starting points for discharge is large when voltage is applied to the electrode 123, plasma can be efficiently generated. As a result, since the plasma intensity per electrode panel 121 increases, PM contained in the exhaust gas can be excellently oxidized and removed even if the number of stacked electrode panels 121 is reduced as compared with that of the conventional electrode panels. By reducing the number of stacked electrode panels 121, not only the size and cost of the plasma reactor 104 but also the size and cost of the PM removal device 101 can be reduced.

Furthermore, the distance between the electrode panels 121 may be set to any distance as long as a dielectric barrier discharge occurs (for example, within a range from 0.2 to 5.0 mm) .

### <Modification>

Although an embodiment of the present invention has been described above, the present invention can be implemented in other forms.

For example, although holes 136 are formed at each portion where the first line portion 131, the second line portion 132, the third line portion 133, and the fourth line portion 134 intersect in the invention above, holes 136 may be formed at not all but any selected portions where the first line portion 131, second line portion 132, the third line portion 133, and the fourth line portion 134 intersect.

Further, as the configuration of the electrode 123, the configuration shown in FIG. 8, that is, the configuration having no holes 136 may be employed, or a configuration in which the third line portions 133 or fourth line portions 134 are omitted from the configuration shown in FIG. 7 or FIG. 8 may be also employed.

The electrode 123, as shown in FIG. 9, is divided into a first section 141, a second section 142, and a third section 143 in that order from the upstream side of the flow direction of the exhaust gas, and the first section 141, the second section 142 and the third section 143, may be formed to have the configuration shown in FIG. 7, FIG. 8, and FIG. 10, respectively.

According to the configuration shown in FIG. 9, the number of edges per unit area in the first section 141 is larger than the number of edges per unit area in the second section 141 and the third section 143, and since the number of starting points for discharge is large when voltage is applied to the electrode, plasma with a high plasma density (i.e., plasma intensity) can be generated. Therefore, at the most upstream section in the flow direction of the exhaust gas between the electrode panels 121, PM is efficiently removed and deposition of PM on the surface of the dielectric 121 can be suppressed. In the portion of exhaust gas between the electrode panels 21 downstream of the most upstream section in the flow direction of the exhaust gas (i.e., the portion facing the second section 142 and the third section 143), even if PM that has flowed downstream without being removed in the upstream side adheres to the surface (i.e., the dielectric 22) of the electrode panel 21, the PM can be removed by plasma generated downstream by active species (i.e., radicals, ozone, etc.) flowing down from the upstream side, thereby suppressing the deposition of PM on the surface of the electrode panel 21.

Consequently, deposition of PM on the entire surface of the dielectric 122 can be suppressed. As a result, it is possible to maintain the PM removal efficiency of the PM removal device 101 (i.e., the plasma reactor) in a satisfactory manner.

In the configuration shown in FIG. 9, the electrode 123 is equally divided into three portions (i.e., a first section 141, a second section 142, and a third section 143), but the proportions of the first section 141, the second section 142, and the third section 143 relative to the entire electrode 123 may be different from each other.

The electrode 123 may have a first section 141 having the configuration shown in FIG. 7 and a second section 142 having the configuration shown in FIG. 8, and the electrode 123 may also have a first section 141 having the configuration shown in FIG. 7 and a third section 143 having the configuration shown in FIG. 10.

The shape of the hole 136 is not limited to a square shape, and may be a rectangle, a circle, a triangle, a polygon with five or more angles, or another shape.

In addition, various design changes can be made to the above configuration within the scope of the items described in the claims.

### DESCRIPTION OF SYMBOLS

- 4,104: plasma reactor
- 21, 121: electrode panel
- 22,122: dielectric
- 23, 123: electrode (i.e., plasma generating electrode)
- 33: mesh opening (hole)
- 34: first section (upstream section)
- 35: second section (downstream portion)
- 36: third section (downstream portion)
- 37: fourth portion (downstream portion)
- 131: first line portion
- 132: second line portion
- 133: third line portion
- 136: hole

## Claims

1. A plasma generating electrode (123) for generating plasma by a dielectric barrier discharge, for use in a plasma reactor (104) comprising a dielectric (122) extending in a flow direction of exhaust gas, **characterized in that** the plasma generating electrode (123) comprises:
a first line portion (131) extending in a first direction;
a second line portion (132) extending in a second direction which intersects with the first direction; and
a third line portion (133) extending in a direction that intersects with both the first direction and the second direction,
wherein a portion where the first line portion (131), the second line portion (132), and the third line portion (133) intersect is provided with a hole (136) in the thickness direction.

2. An electrode panel (121), comprising;
a dielectric (122) and an electrode (123) for generating plasma by a dielectric barrier discharge,
wherein the plasma generating electrode (123) according to claim 1 is used as the electrode (123).

3. A plasma 2. reactor (104), wherein a plurality of electrode panels (121) are disposed in parallel with spaces there between, plasma is generated by dielectric barrier discharges between the electrode panels (121),
wherein the electrode panel (121) according to claim 2 is used as the electrode panel (121).

## Patentansprüche

1. Plasmaerzeugungselektrode (123) zum Erzeugen von Plasma durch eine dielektrische Barrierenentladung zur Verwendung in einem Plasmareaktor (104), der ein Dielektrikum (2, 122) aufweist, das sich in einer Strömungsrichtung von Abgas erstreckt, **dadurch gekennzeichnet, dass** die Plasmaerzeugungselektrode (123) aufweist:
ein erster Linienabschnitt (131), der sich in eine erste Richtung erstreckt;
einen zweiten Linienabschnitt (132), der sich in einer zweiten Richtung erstreckt, die die erste Richtung schneidet; und
einen dritten Linienabschnitt (133), der sich in einer Richtung erstreckt, die sowohl die erste als auch die zweite Richtung schneidet,
wobei ein Abschnitt, in dem sich der erste Linienabschnitt (131), der zweite Linienabschnitt (132) und der dritte Linienabschnitt (133) schneiden, mit einem Loch (136) in der Dickenrichtung versehen ist.

2. Eine Elektrodenplatte (121), aufweisend;
ein Dielektrikum (122) und eine Elektrode (123) zur Erzeugung von Plasma durch eine dielektrische Barriereentladung,
wobei die plasmaerzeugende Elektrode (123) nach Anspruch 1 als die Elektrode (123) verwendet wird.

3. Ein Plasma-Reaktor (104), bei dem eine Vielzahl von Elektrodenplatten (121) parallel mit Zwischenräumen dazwischen angeordnet sind, wobei das Plasma durch dielektrische Barriereentladungen zwischen den Elektrodenplatten (121) erzeugt wird,
wobei die Elektrodenplatte (121) nach Anspruch 2 als die Elektrodenplatte (121) verwendet wird.

## Revendications

1. Électrode de génération de plasma (123) pour générer un plasma par une décharge de barrière diélectrique, pour une utilisation dans un réacteur à plasma (104) comprenant un diélectrique (122) s'étendant dans une direction de circulation d'un gaz d'échappement, **caractérisée en ce que** l'électrode de génération de plasma (123) comprend :
une première partie de ligne (131) s'étendant dans une première direction ;
une deuxième partie de ligne (132) s'étendant dans une seconde direction qui croise la première direction ; et
une troisième partie de ligne (133) s'étendant dans une direction qui croise à la fois la première direction et la seconde direction,
dans lequel une partie, où la première partie de ligne (131), la deuxième partie de ligne (132) et la troisième partie de ligne (133) se croisent, est munie d'un trou (136) dans la direction de l'épaisseur.

2. Panneau d'électrode (121), comprenant ;
un diélectrique (122) et une électrode (123) pour générer un plasma par une décharge de barrière diélectrique,
dans lequel l'électrode de génération de plasma (123) selon la revendication 1 est utilisée en tant qu'électrode (123).

3. Réacteur à plasma (104), dans lequel une pluralité de panneaux d'électrode (121) sont disposés en parallèle avec des espaces entre eux, un plasma est généré par des décharges de barrière diélectrique entre les panneaux d'électrode (121),
dans lequel le panneau d'électrode (121) selon la revendication 2 est utilisé en tant que panneau d'électrode (121).
